**Europäisches Patentamt**

**European Patent Office**

**Office européen des brevets**

(19)

(11) Veröffentlichungsnummer: **0 108 326**
**A1**

(12) # EUROPÄISCHE PATENTANMELDUNG

(21) Anmeldenummer: **83110611.7**

(22) Anmeldetag: **24.10.83**

(51) Int. Cl.³: **C 02 F 1/24**
**B 01 D 21/00**

(30) Priorität: **25.10.82 DE 3239471**

(43) Veröffentlichungstag der Anmeldung:
**16.05.84 Patentblatt 84/20**

(84) Benannte Vertragsstaaten:
**AT BE CH FR GB IT LI LU NL SE**

(71) Anmelder: **Preussag AG**
**Leibnizufer 9**
**D-3000 Hannover 1(DE)**

(72) Erfinder: **Wagner, Axel, Dipl.-Ing.**
**Hammer-Stein-Strasse 2**
**D-3000 Hannover(DE)**

(74) Vertreter: **Brose, D. Karl, Dipl.-Ing. et al,**
**Patentanwälte Brose & Partner Wiener Strasse 2**
**D-8023 München-Pullach(DE)**

(54) **Reinigungsstufe zur Abwasser-, Brauchwasser- oder Trinkwasseraufbereitung.**

(57) Zur Leistungssteigerung bei gleichem Bauvolumen bzw. zur Reduzierung des Bauvolumens bei gleicher Leistung wird vorgeschlagen, eine Flotationsstufe mit einer Plattenseparatorstufe zu kombinieren. Hierzu wird in ein Flotationsbecken (1) ein Plattenseparator (2) eingesetzt, durch den die zu reinigende Flüssigkeit geleitet wird.

EP 0 108 326 A1

0108326

Anmelderin: Preussag Aktiengesellschaft Berlin-Hannover, Leibnizufer 9, D - 3000 Hannover 1

Reinigungsstufe zur Abwasser-, Brauchwasser- oder Trinkwasseraufbereitung.

BESCHREIBUNG

Die Erfindung betrifft eine Reinigungsstufe zur Flüssigkeitsaufbereitung, insbesondere zur Abwasser-, Brauchwasser- oder Trinkwasseraufbereitung.

Es ist bekannt und üblich, zum Zwecke der Abwasser-, Brauchwasser- oder Trinkwasseraufbereitung die zu reinigende Flüssigkeit durch ein Flotationsbecken hindurchzuführen, in dem die zu reinigende Flüssigkeit mit einem gasförmigen Medium, insbesondere mit Druckluft, vermischt wird, so daß zumindest ein Teil der in der zu reinigenden Flüssigkeit befindlichen, zu entfernenden Stoffe auf die Oberfläche des Flotationsbeckens aufgeschwemmt wird, von der dieser Schwimmschlamm dann mittels eines Oberflächenräumers od. dgl. entfernt wird.

Der vorliegenden Erfindung liegt die Aufgabe zugrunde, eine Reinigungsstufe zu schaffen, die zwar nach dem Prinzip der Flotation arbeitet, sich gegenüber den bisher üblichen Flotationsstufen jedoch durch eine deutliche Leistungssteigerung auszeichnet.

Erfindungsgemäß wird diese Aufgabe durch die Kombination einer Flotationsstufe und einer Plattenseparatorstufe gelöst. Bei der erfindungsgemäßen Kombination einer Flotationsstufe mit einer Plattenseparatorstufe wird die zu reinigende Flüssigkeit gleichzeitig flotiert und durch einen Plattenseparator hindurchgeführt. Durch die Platten des Plattenseparators, der vorzugsweise als Schräg- oder Parallelplattenseparator ausgebildet sein kann, wird die für die Flotation effektiv wirksame Gesamtoberfläche der Reinigungsstufe, die einen entscheidenden Faktor für die Leistungsfähigkeit der Reinigungsstufe darstellt, erheblich vergrößert, so daß bei gleichem Bauvolumen des Flotationsbeckens eine gegenüber dem Stand der Technik (reine Flotationsstufe) erheblich gesteigerte Reinigungseffizienz erreicht wird.

Insgesamt wird daher durch die Erfindung eine erhebliche Leistungssteigerung der Reinigungsstufe und/oder eine deutliche Reduzierung des Bauvolumens der Reinigungsstufe erzielt.

Aus der CH-PS 586 162 ist eine Vorrichtung zur Abwasserbehandlung mittels Flotation bekannt, wobei die Flotation auf elektrolytischem Wege erzeugt wird. Im Bereich des sich über dem Flüssigkeitsspiegel bildenden Schaums sind mehrere parallele geneigte Aluminiumplatten angeordnet, an deren Grenzflächen ebenfalls auf elektrolytischem Wege Mikroblasen erzeugt werden, welche die Flotation der Schaumschicht verbessern sollen. Diese Polplatten aus Aluminium dienen somit lediglich der Stabilisierung des Schwimmschaums, nicht jedoch der Vergrößerung der effektiv wirksamen Beckenfläche, wie dies von einem Separator her bekannt und im Falle der vorliegenden Erfindung bezweckt ist.

Im folgenden wird die Erfindung anhand eines Ausführungsbeispiels näher beschrieben.

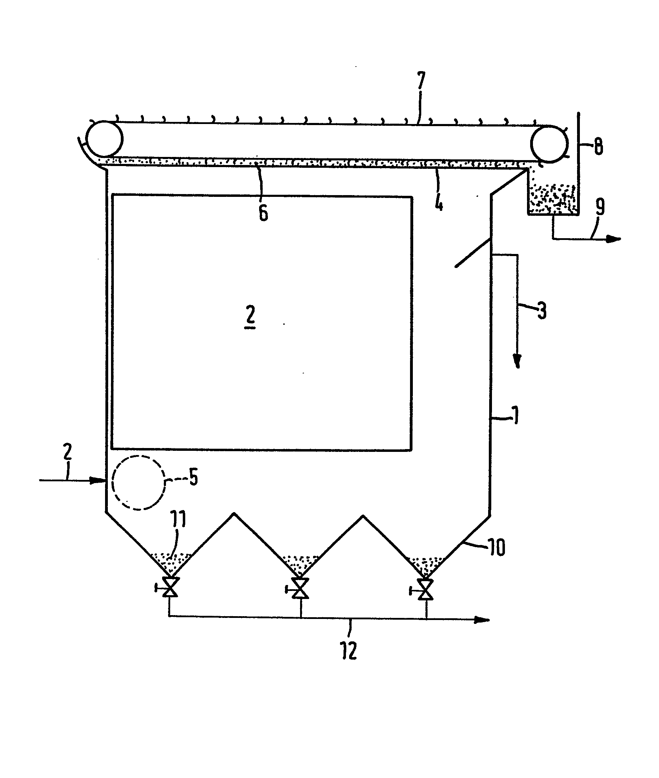

Die einzige Figur zeigt in schematischer Darstellung eine erfindungsgemäße Reinigungsstufe.

Die zu reinigende Flüssigkeit wird über einen Zulauf 2 in ein Reinigungsbecken 1 eingeführt. Die gereinigte Flüssigkeit wird über einen Ablauf 3, welcher unterhalb des Flüssigkeitsspiegels 4 angeordnet ist, dem Flotationsbecken 1 entnommen und gegebenenfalls einer weiteren Reinigungsstufe zugeführt. Im Bereich des Zulaufs 2, der sich im unteren Bereich des Flotationsbeckens 1 und dem Ablauf 3 in etwa gegenüberliegend befindet, wird in einem durch die gestrichelten Linien 5 angedeuteten Entspannungsraum Druckluft zur Entspannung gebracht. Diese Druckluft wird durch ein nicht dargestelltes Leitungssystem in diesen Entspannungsraum 5 eingeleitet.

Die von der Druckluft benetzten Komponenten wandern aufgrund des Auftriebes der Luft nach oben und aufgrund der allgemeinen Strömung innerhalb des Flotationsbeckens 1 in der Fig. von links nach rechts. An der Flüssigkeitsoberfläche 4 sammeln sich die benetzten Komponenten als Schwimmschlamm 6 und werden von hier mittels eines Oberflächenräumers 7 laufend abgezogen und einer Abführrinne 8 zugeführt, von der sie über eine Abführleitung 9 abgeführt werden.

Innerhalb des Flotationsbeckens 1 ist oberhalb des Zulaufes 2 und unterhalb der Flüssigkeitsoberfläche 4 ein Plattenpaket 2 angeordnet, das sich im wesentlichen über die gesamte Breite des Flotationsbeckens erstreckt und welches den Plattenseparator bildet. Dieses Plattenpaket 2 umfaßt mehrere, in der Zeichenebene hintereinanderliegende, parallele Platten, wobei diese Platten relativ zur Zeichenebene, also relativ zur Vertikalen, geneigt sind. Diese Platten vergrößern die effektiv wirksamen Abscheideflächen, wodurch die Effizienz der Flotation gesteigert wird.

Am Boden des Flotationsbeckens sind trichterförmige Auffangbecken 10 ausgebildet, welche die nach unten schwebenden Sedimente 11 sammeln, die über ein Leitungssystem 12 aus dem Becken 1 abgeführt werden können.

Im Falle des vorstehend beschriebenen Ausführungsbeispieles wird der Plattenseparator 2 nach dem Querstromverfahren durchströmt. Selbstverständlich ist es jedoch auch möglich, eine solche Anordnung zu treffen, daß der Plattenseparator 2 im Gegenstromverfahren oder im Gleichstromverfahren betrieben wird.

Im Falle des dargestellten Ausführungsbeispiels wird die einströmende, zu reinigende Flüssigkeit mit Druckluft vermischt. Es ist jedoch auch möglich, einen Teilstrom der vom Flotationsbecken abgeführten Flüssigkeit mit Druckluft oder einem sonstigen Gas zu durchmischen und erneut in das Flotationsbecken einzuführen. Die Erfindung ist auf alle gängigen Flotationssysteme anwendbar.

Auch ist es möglich, die Plattenseparatorstufe in eine bereits bestehende, konventionelle Flotationsstufe nachträglich einzubauen. Ebenso kann eine bestehende Separatorstufe zu einer erfindungsgemäßen Reinigungsstufe nachgerüstet werden.

Sämtliche aus der Beschreibung, den Ansprüchen und Zeichnungen hervorgehenden Merkmale und Vorteile der Erfindung, einschließlich konstruktiver Einzelheiten und räumlicher Anordnungen, können sowohl für sich als auch in beliebiger Kombination erfindungswesentlich sein.

Patentanwälte Brose & Partner
Dipl. Ing. Karl A. Brose †
Dipl. Ing. D. Karl Brose
Dipl. Phys. Michael Resch
D-8023 München-Pullach
Wiener Str. 2, Tel. Mchn. 7933071, 7933072

19. Oktober 1983

Anmelderin: Preussag Aktiengesellschaft Berlin-Hannover,
Leibnizufer 9, D - 3000 Hannover 1

PATENTANSPRÜCHE

1. Reinigungsstufe zur Flüssigkeitsaufbereitung, insbesondere zur Abwasser-, Brauchwasser- oder Trinkwasseraufbereitung, gekennzeichnet durch die Kombination einer Flotationsstufe und einer Plattenseparatorstufe (2).

2. Vorrichtung nach Anspruch 1, dadurch gekennzeichnet, daß der Plattenseparator (2) als Schräg- bzw. Parallelplattenseparator ausgebildet ist.

3. Vorrichtung nach Anspruch 1 oder 2, dadurch gekennzeichnet, daß ein Flotationsbecken (1) vorgesehen ist, in dem ein Plattenseparator (2) angeordnet ist, durch den die zu reinigende Flüssigkeit geleitet wird.

4. Verfahren zum Reinigen von Flüssigkeit, insbesondere zum Zwecke der Abwasser-, Brauchwasser- oder Trinkwasseraufbereitung, dadurch gekennzeichnet, daß die zu reinigende Flüssigkeit gleichzeitig flotiert und durch einen Plattenseparator hindurchgeführt wird.

0108326

Nummer der Anmeldung

## EUROPÄISCHER RECHERCHENBERICHT

Europäisches
Patentamt

EP 83 11 0611

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-B-1 213 223 (M. KROFTA) * Spalte 3, Zeile 43 - Spalte 4, Zeile 37 * | 1-4 | C 02 F 1/24 B 01 D 21/00 |
| X | FR-A-2 144 862 (FENWICK) * Seite 4, Anspruch 1, Abbildungen 1,2 * | 1-4 | |
| X | KORRESPONDENZ ABWASSER, Band 29, Nr. 9, September 1982, Seiten 629-636, GFA, St. Augustin, DE. H. SCHADE: "Optimierung von Flotationsanlagen durch Einsatz eines TPF-Abscheiders (Tiltable Plate Flotator) in der Abwassertechnik" * Seite 632, letzter Absatz - Seite 633, Zeile 10 * | 1-4 | |
| X | VOEDINGSMIDDELEN TECHNOLOGIE, Band 14, Nr. 17, August 1981, Seite 31, Zeist, NL. "Fysisch-chemische afvalwaterbehandeling voor de voedingsmiddelenindustrie" * Abbildung * | 1-4 | RECHERCHIERTE SACHGEBIETE (Int. Cl. 5) C 02 F B 01 D B 03 D |
| A | DE-A-2 525 550 (G. ABEL) * Seite 8, Anspruch 1 * | 1-3 | |
| | --- -/- | | |

Der vorliegende Recherchenbericht wurde für alle Patentansprüche erstellt.

| Recherchenort DEN HAAG | Abschlußdatum der Recherche 19-01-1984 | Prüfer TEPLY J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPA Form 1503. 03.82

## Europäisches Patentamt

## EUROPÄISCHER RECHERCHENBERICHT

### EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 380 990 (PIELKENROOD-VINITEX) * Figur 2 *<br><br>----- | 1-3 | |

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 19-01-1984 | TEPLY J. |

KATEGORIE DER GENANNTEN DOKUMENTEN
X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
     nach dem Anmeldedatum veröffentlicht worden ist
D : in der Anmeldung angeführtes Dokument
L : aus andern Gründen angeführtes Dokument

& : Mitglied der gleichen Patentfamilie, überein-
     stimmendes Dokument

EPA Form 1503. 03 82